(19) Europäisches Patentamt
European Patent Office
Office européen des brevets

(11) Veröffentlichungsnummer: **0 171 493**
**B1**

(12) # EUROPÄISCHE PATENTSCHRIFT

(45) Veröffentlichungstag der Patentschrift: **25.07.90**

(51) Int. Cl.$^5$: **C 09 D 183/04**, C 08 G 77/58

(21) Anmeldenummer: **85102099.0**

(22) Anmeldetag: **26.02.85**

(60) **Teilanmeldung 89122229.1 eingereicht am 26/02/85.**

(54) **Verfahren und Lack zur Herstellung von kratzfesten Beschichtungen.**

(30) Priorität: **27.02.84 DE 3407087**

(43) Veröffentlichungstag der Anmeldung:
**19.02.86 Patentblatt 86/08**

(45) Bekanntmachung des Hinweises auf die Patenterteilung:
**25.07.90 Patentblatt 90/30**

(84) Benannte Vertragsstaaten:
**AT BE CH DE FR GB IT LI LU NL SE**

(56) Entgegenhaltungen:
**EP-A-0 011 209**
**FR-A-2 287 489**
**FR-A-2 413 415**
**GB-A-2 068 010**

**Die Akte enthält technische Angaben, die nach dem Eingang der Anmeldung eingereicht wurden und die nicht in dieser Patentschrift enthalten sind.**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-8000 München 19 (DE)**

(72) Erfinder: **Philipp, Gottfried, Dr.**
**Oskar-Popp-Strasse 7**
**D-8702 Kist (DE)**
Erfinder: **Schmidt, Helmut, Dr.**
**Tilman-Riemenschneider-Strasse 15**
**D-8706 Höchberg (DE)**

(74) Vertreter: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 171 493 B1

**Beschreibung**

Zahlreiche Gegenstände müssen mit kratzfesten Beschichtungen versehen werden, da ihre Kratzempfindlichkeit keinen praktischen Einsatz oder nur kurze Einsatzzeiten ermöglicht. Die bekannten kratzfesten Beschichtungsmaterialien bringen zumeist keine ausreichende Verbesserung, da sie entweder nicht kratzbeständig genug sind oder aber keine ausreichende Haftung bei geeigneter Schichtdicke auf dem Substrat besitzen. Daneben sind oft lange Aushrärtungszeiten erforderlich.

Ziel der Erfindung ist es daher, ein Verfahren und einen Lack zur Herstellung von Beschichtungen bereitzustellen, die hohe Kratzbeständigkeit und Haftfestigkeit auf dem Substrat bei gleichzeitig guten optischen Eigenschaften, insbesondere Transparenz, aufweisen.

Gegenstand der Erfindung ist ein Verfahren zur Herstellung von kratzfesten Beschichtungen, das dadurch gekennzeichnet ist, daß man einen Lack, der erhalten worden ist durch hydrolytische Vorkondensation von

a) mindestens einer im Reaktionsmedium löslichen Zirkonverbindung der Formel I

$$ZrR_4 \quad (I)$$

in der R Halogen, Hydroxy, Alkoxy, Acyloxy oder einen Chelatliganden darstellt;

b) mindestens einem organofunktionellen Silan der Formel II

$$R'_m (R'' Y)_n SiX_{(4-m-n)} \quad (II)$$

in der R' Alkyl oder Alkenyl bedeutet, R'' Alkylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe —$NR'''_2$ (R''' = Wasserstoff und/oder Alkyl) bedeutet, Y Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, m und n den Wert 0, 1, 2 oder 3 haben, wobei m + n den Wert 1, 2 oder 3 hat;

und gegebenenfalls

mindestens einem im Reaktionsmedium löslichen, schwerflüchtigen Oxid eines Elementes der Hauptgruppen Ia bis Va oder der Nebengruppen IVb oder Vb des Periodensystems, mit Ausnahme von Zirkon, oder mindestens einer im Reaktionsmedium löslichen, unter den Reaktionsbedingungen ein schwerflüchtiges Oxid bildenden Verbindung eines dieser Elemente;

mit einer geringeren Wassermenge als der zur vollständigen Hydrolyse der hydrolysierbaren Gruppen stöchiometrisch erforderlichen Menge, gegebenenfalls in Gegenwart eines Kondensationskatalysators, und anschließende Weiterkondensation durch Zugabe mindestens de Wassermenge, die zur Hydrolyse der verbliebenen hydrolysierbaren Gruppen erforderlich ist, sowie gegebenenfalls eines Kondensationskatalysators, wobei, bezogen auf die Gesamt-Molzahl der Ausgangskomponenten, 5 bis 70 Mol-% der Komponente (a), 30 bis 95 Mol-% der Komponente (b) und 0 bis 65 Mol-% der Komponente (c) verwendet worden sind,

auf ein Substrat aufbringt und härtet.

Gegenstand der Erfindung sind ferner die auf diese Weise mit kratzfesten Beschichtungen versehenen Substrate und die durch Vorkondensation bzw. Weiterkondensation erhältlichen Lacke.

In den vorstehenden Formeln (I) und (II) können mehrmals vorhandene Reste R, R', R'', R''', X bzw. Y bei einer Verbindung jeweils die gleiche oder unterschiedliche Bedeutung haben.

Die Alkyreste bedeuten z.B. geradkettige, verzweigte oder cyclische Reste mit 1 bis 10 Kohlenstoffatomen und insbesondere niedere Alklylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl und Cyclohexyl.

Die Alkenylreste sind z.B. geradkettige, verzweigte oder cyclische Reste mit 2 bis 10 Kohlenstoffatomen und insbesondere niedere Alkenylreste, wie Vinyl, Allyl und 2-Butenyl.

Die Alkoxy-, Acyloxy-, Alkylen-, Alkenylen-, Alkylamino-, Dialkylamino-, Alkylcarbonyl-Alkoxycarbonyl- und die substituierten Aminoreste oder Amidreste Y leiten sich z.B. von den vorstehend genannten Alkyl- und Alkenylresten ab. Spezielle Beispiele sind Methoxy, Ethoxy, n- und i-Propoxy, n-, sek.- und tert.- Butoxy, Isobutoxy, β-Methoxyethoxy, Acetyloxy, Propionyloxy, Monomethylamino, Monoethylamino, Dimethylamino, Diethylamino, Ethylen, Propylen, Butylen, Methylcarbonyl, Ethylcarbonyl, Methoxycarbonyl and Ethoxycarbonyl.

Die genannten Reste können gegebenenfalls übliche Substituenten tragen, z.B. Halogenatome, niedere Alkylreste, Hydroxy-, Nitro- oder Aminogruppen.

Unter den Halogenen sind Fluor, Chlor und Brom bevorzugt und Chlor besonders bevorzugt.

Spezielle Beispiele für Zirkonverbindungen (a) sind $ZrCl_4$, $Zr(O\text{-}i\text{-}C_3H_7)_4$, $Zr(OC_4H_9)_4$, $Zr(acetylacetonato)_4$, und andere Zirkonkomplexe mit Chelatliganden, die vorzugsweise über Sauerstoff und/oder Stickstoff koordiniert sind.

Bei den organofunktionellen Silanen (b) kann die Brückengruppe R'' gegebenenfalls durch Sauerstoff-oder Schwefelatome oder —NH-Gruppen unterbrochen sein. Vorzugsweise entstehen auf diese Art 2 bis 10 sich wiederholende Struktureinheiten.

Spezielle Beispiele für organofunktionelle Silane (b) sind:

$CH_3$—Si—$Cl_3$, $CH_3$—Si—$(OC_2H_5)_3$, $C_2H_5$—Si—$Cl_3$, $C_2H_5$—Si—$(OC_2H_5)_3$, $CH_2$=CH—Si—$(OC_2H_5)_3$,

$CH_2$=CH—Si—$(OC_2H_4OCH_3)_3$, $CH_2$=CH—Si—$(OOCCH_3)_3$, $(CH_3)_2$—Si—$Cl_2$, $(CH_3)_2$—Si—$(OC_2H_5)_2$,

$(C_2H_5)_2$—Si—$(OC_2H_5)_2$, $(CH_3)$ $(CH_2$=CH)—Si—$Cl_2$, $(CH_3)_3$—Si—Cl, $(C_2H_5)_3$—Si—Cl,

(t-$C_4H_9$) $(CH_3)_2$—Si—Cl, $(CH_3)_2(CH_2$=CH—$CH_2)$—Si—Cl, $(CH_3O)_3$—Si—$C_3H_6$—Cl,

$(C_2H_5O)_3$—Si—$C_3H_6$—$NH_2$, $(C_2H_5O)_3$—Si—$C_3H_6$—CN, $(CH_3O)_3$—Si—$C_3H_6$—SH,

$(CH_3O)_3$—Si—$C_3H_6$—NH—$C_2H_4$—$NH_2$, $(CH_3O)_3$—Si—$C_3H_6$—NH—$C_2H_4$—NH—$C_2H_4$—$NH_2$,

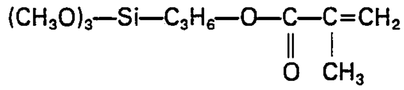

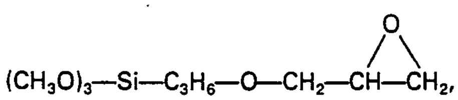

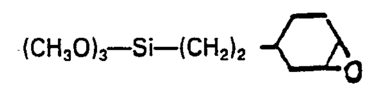

Diese Silane sind zum Teil Handelsprodukte oder sie lassen sich nach bekannten Methoden herstellen; vgl. W. Noll, "Chemie und Technologie der Silicone", Verlag Chemie GmbH, Weinheim/Bergstrasse (1968).

Anstelle der monomeren Ausgangssilanen (b) können gegebenenfalls auch vorkondensierte, im Reaktionsmedium lösliche Oligomere dieser Silane eingesetzt werden; d.h. geradkettige oder cyclische, niedermolekulare Teilkondensate (Polyorganosiloxane) mit einem Kondensationsgrad von z.B. etwa 2 bis 100.

Als Komponente (c) werden im Reaktionsmedium lösliche, schwerflüchtige Oxide oder derartige schwerflüchtige Oxide bildende Verbindungen von Elementen der Hauptgruppen Ia bis Va oder der Nebengruppen IVb oder Vb des Periodensystems eingesetzt. Vorzugsweise leitet sich die Komponente (c) von folgenden Elementen ab: Na, K, Mg, Ca, B, Al, Si, Sn, Pb, P, As, Sb und/oder V, wobei B, Al, Si, Sn und P besonders bevorzugt sind.

Unter den schwerflüchtigen Oxiden sind $B_2O_3$, $P_2O_5$ und $SnO_2$ besonders bevorzugt.

Im Reaktionsmedium lösliche, schwerflüchtige Oxide bildende Verbindungen sind z.B. anorganische Säuren, wie Phosphorsäure und Borsäure, sowie deren Ester. Ferner eignen sich z.B. Halogenide, wie $SiCl_4$, $HSiCl_3$, $SnCl_4$ und $PCl_5$, und Alkoxide, wie NaOR, KOR, $Ca(OR)_2$, $Al(OR)_3$, $Si(OR)_4$, $Sn(OR)_4$ und $VO(OR)_3$, wobei sich R von niederen Alkoholen, wie Methanol, Ethanol, Propanol oder Butanol, ableitet. Weitere verwendbare Ausgangsverbindungen sind entsprechende Salze mit flüchtigen Säuren, z.B. Acetate, wie Siliciumtetraacetat, basische Acetate, wie basisches Bleiacetat, und Formiate.

Vorzugsweise verwendet man zur Herstellung des Lacks 20 bis 40 Mol-% der Komponente (a), 40 bis 80 Mol-% der Komponente (b) und höchstens 40 Mol-. der Komponente (c).

Zur Herstellung des Lacks werden die Ausgangskomponenten im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Diese unterstöchiometrische Wassermenge wird vorzugsweise so zudosiert, daß lokale Überkonzentrationen vermieden werden. Dies gelingt z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80-prozentigem Ethanol, oder Salzhydraten, z.B. $CaCl_2 \cdot 6H_2O$.

Vorzugsweise erfolgt die Vorkondensation in Gegenwart eines Kondensationskatalysators, jedoch in Abwesenheit eines organischen Lösungsmittels. Gegebenenfalls kann jedoch ein mit Wasser zumindest teilweise mischbares organisches Lösungsmittel angewandt werden, z.B. ein aliphatischer Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon. Eventuell während der Vorkondensation zugesetztes oder gebildetes Lösungsmittel wird vorzugsweise nicht abgedampft, sondern das Reaktionsgemisch wird als solches zur Weiterkondensation eingesetzt.

Als Kondensationskatalysatoren eigenen sich Protonen oder Hydroxylionen abspaltende Verbindungen und Amine. Spezielle Beispiele sind organische oder anorganische Säuren, wie Salzsäure, Schwefelsäure, Phosphorsäure, Ameisensäure, oder Essigsäure, sowie organische oder anorganische Basen, wie Ammoniak, Alkali- oder Erdalkalimetallhydroxide, z.B. Natrium-, Kalium- oder Calciumhydroxid,

und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Die Vorkondensation wird üblicherweise bei Temperaturen von Raumtemperatur bis 100°C, vorzugsweise bei Raumtemperatur durchgeführt. Bei Verwendung eines organischen Lösungsmittels kann die Vorkondensation auch bei Temperaturen bis zur Siedetemperatur des Lösungsmittels erfolgen, wird jedoch auch hier vorzugsweise bei Raumtemperatur durchgeführt.

Gegebenenfalls kann man zunächst eine oder mehrere Ausgangskomponenten oder einen Teil einer, mehrerer oder aller Ausgangskomponenten vorkondensieren, dann die restlichen Ausgangskomponenten zumischen und anschließend nach dem Verfahren der Vorkondensation oder Weiterkondensation cokondensieren.

Die Vorkondensation wird soweit geführt, daß das entstehende Vorkondensat noch flüssige Konsistenz hat. Da der erhaltene Vorkondensatlack hydrolyseempfindlich ist, muß er unter Feuchtigkeitsausschluß aufbewahrt werden.

Die anschließende hydrolytische Weiterkondensation des Vorkondensats erfolgt in Gegenwart mindestens der Wassermenge, die zur Hydrolyse der noch verbliebenen hydrolysierbaren Gruppen stöchiometrisch erforderlich ist, vorzugsweise jedoch mit einer überstöchiometrischen Wassermenge. In einer aus praktischen Gründen bevorzugten Ausführungsform wird zur Weiterkondensation die Wassermenge eingesetzt, die zur vollständigen Hydrolyse der ursprünglich eingesetzten Ausgangskomponenten stöchiometrisch erforderlich wäre.

Die Weiterkondensation erfolgt vorzugsweise in Gegenwart eines der vorstehend genannten Kondensationskatalysatoren, wobei ebenfalls flüchtige Verbindungen bevorzugt sind. Dei Gesamt-Katalysatorkonzentration kann z.B. bis zu 5 Mol/Liter betragen.

Bei der Weiterkondensation kann gegebenenfalls auch eines der vorstehend genannten organischen Lösungsmittel anwesend sein oder zugesetzt werden, wobei während der Vor- und Weiterkondensation gebildetes Lösungsmittel oder zur Vor- oder Weiterkondensation eventuell zugesetztes Lösungsmittel nach beendeter Weiterkondensation vorzugsweise nicht abgedampft wird.

Die Weiterkondensation erfolgt gewöhnlich bei Temperaturen von Raumtemperatur bis 100°C, vorzugsweise Raumtemperatur bis 80°C. Überraschenderweise hat sich gezeigt, daß beim Erhitzen des erhaltenen Lackes auf 40 bis 80°C ohne Abdampfen des Lösungsmittels eine Stabilisierung der Lackviskosität erzielt wird; d.h. die Viskosität bleibt nach erfolgter Polykondensation über längere Zeit im wesentlichen konstant.

Der Vorkondensatlack bzw. der durch Weiterkondensieren erhaltene Lack ist als solcher verwendungsfähig. Gegenbenenfalls können jedoch üblich Lackadditive zugesetzt werden, z.B. organische Verdünnungsmittel, Verlaufmittel, Färbemittle (Farbstoffe oder Pigmente), UV-Stabilisatoren, Füllstoffe, Viskositätregler oder Oxidationsinhibitoren.

Die Verarbeitung der Lacke muß innerhalb einer bestimmten Topfzeit erfolgen, die für das Weiterkondensat nach der obengenannten bevorzugten Ausführungsform z.B. mindestens etwa 1 Woche beträgt. Zur Beschichtung werden übliche Beschichtungsverfahren angewandt, z.B. das Tauchen, Fluten, Gießen, Schleudern, Spritzen oder Aufstreichen.

Als Substrate eignen sich beliebige Werkstoffe, z.B. Metalle, Kunststoffe, Keramik, Glas oder Holz. Auch die Form des Substrats kann beliebig gewählt werden. Besonders vorteilhafte Ergebnisse werden mit kratzempfindlichen Kunststoffen erzielt, z.B. Polymethacrylaten, Polycarbonaten, Polystyrolen, insbesondere mit Poly(diethylenglykol-bis-allylcarbonat).

Die Bechichtung wird in Schichtdicken von z.B. 1 bis 100 µm, vorzugsweise 5 bis 50 µm und insbesondere 10 bis 30 µm aufgetragen. Gegebenenfalls kann das Substrat vor Aufbringen der erfindungsgemäßen Beschichtung mit einer Haftvermittler- oder Primerschicht grundiert werden.

Der aufgetragene Lack wird anschließend ausgehärtet, indem man ihn wärmebandelt. Zur Aushärtung genügt im allgemeinen ein einige Minuten bis 1 Stunde dauerndes Erhitzen auf eine Temperatur von 150°C, vorzugsweise 60 bis 130°C. Lediglich im Falle des Vorkondensatlackes können etwas längere Härtungszeiten erforderlich sein, z.B. bis zu 2 Stunden.

Der Vorkondensatlack reagiert aufgrund seiner Hydrolyseempfindlichkeit mit der Luftfeuchtigkeit und kann daher wie ein herkömmlicher lufttrocknender Lack angewandt werden.

Falls der Vorkondensatlack oder der weiterkondensierte Lack aufgrund der Verwendung entsprechender Ausgangskomponenten polymerisierbare Gruppen enthält, kann die aufgetragene Lackschicht zusätzlich auch photochemisch gehärtet werden, z.B. mit UV-Strahlen. In diesem Fall werden der Lackformulierung vorzugsweise Photoinitiatoren zugesetzt.

Die nach dem erfindungsgemäßen Verfahren beschichteten Substrate besitzen gute Kratzfestigkeit und Haftung zwischen Überzug und Substrat, wobei die Haftung auf Kunststoffsubstraten durch eine Primerschicht verbessert werden kann. Die Beschichtungen sind zwischen −20 und +70°C temperaturwechselbeständig. Aufgrund der guten Klarheit und Transparenz der Überzüge eignet sich das erfindungsgemäße Verfahren insbesondere zur kratzfesten Beschichtung von optischen Kunststofflinsen, z.B. Kunststoff-Brillengläsern.

Beispiel

1181 g 3-Glycidoxypropyltrimethoxysilan, 457 g Tetramethoxysilan und 655 g Tetrapropylzirkonat werden mit 125 g Kieselgel, das mit 135 g 0,1 N wäßrige Natronlauge beladen ist, bei Raumtemperatur 60 Minuten verrührt, mindestens aber so lange, bis bei Zugabe eines Tropfen Wassers kein Niederschlag entsteht. Anschließend wird das Kieselgel abfiltriert. In das klare Filtrat werden bei Raumtemperatur 721 g 0,1 N wäßrige Natronlauge eingerührt, danach wird bei Raumtemperatur 2 Stunden weitergerührt. Es entsteht eine klare, deutlich viskosere Lösung, die schließlich mit 1360 g Butanol verdünnt wird. Dieser Lack weist 35 Sekunden Auslaufzeit aus dem ISO-Becher auf. Die Lackviskosität steigt um $\leq$ 3% pro Tag.

Dieser Lack wird z.B. durch Eintauchen des Substrats aufgezogen und 45 Minuten bei 90°C gehärtet. Wenn mehrere Schichten durch Tauchlackierung aufgezogen werden, wird jede Schicht nur 10 Minuten bei 90°C angetrocknet; erst nach dem letzten Lackierungsschritt wird das Coating 45 Minuten bei 90°C gehärtet. Solche Coatings sind klar und transparent; $\geq$ 15 µm dicke Coatings auf Poly(diethylenglykol-bis-allylcarbonat) werden von einem Vickers-Diamanten unter 50 g Belastung nicht gekratzt und weisen eine gute Haftfestigkeit auf.

**Patentansprüche**

1. Verfahren zur Herstellung von kratzfesten Beschichtungen, dadurch gekennzeichnet, daß man einen Lack, der erhalten worden ist durch hydrolytische Vorkondensation von

a) mindestens einer im Reaktionsmedium löslichen Zirkonverbindung der Formel I

$$ZrR_4 \qquad (I)$$

in der R Halogen, Hydroxy, Alkoxy, Acyloxy oder einen Chelatliganden darstellt;

b) mindestens einem organofunktionellen Silan der Formel II

$$R'_m (R'' Y)_n SiX_{(4-m-n)} \qquad (II)$$

in der R' Alkyl oder Alkenyl bedeutet, R'' Alkylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe $—NR'''_2$ (R''' = Wasserstoff und/oder Alkyl) bedeutet, Y Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, m und n den Wert 0, 1, 2 oder 3 haben, wobei m + n den Wert 1, 2 oder 3 hat; und gegebenenfalls

c) mindestens einem im Reaktionsmedium löslichen, schwerflüchtigen Oxid eines Elementes der Hauptgruppen Ia bis Va oder der Nebengruppen IVb oder Vb des Periodensystems, mit Ausnahme von Zirkon, oder mindestens einer im Reaktionsmedium löslichen, unter den Reaktionsbedingungen ein schwerflüchtiges Oxid bildenden Verbindung eines dieser Elemente;

mit einer geringeren Wassermenge als der zur vollständigen Hydrolyse der hydrolysierbaren Gruppen stöchiometrisch erforderlichen Menge, gegebenenfalls in Gegenwart eines Kondensationskatalysators, und anschließende Weiterkondensation durch Zugabe mindestens der Wassermenge, die zur Hydrolyse der verbliebenen hydrolysierbaren Gruppen erforderlich ist, sowie gegebenenfalls eines Kondensationskatalysators, wobei, bezogen auf die Gesamt-Molzahl der Ausgangskomponenten, 5 bis 70 Mol-% der Komponente (a), 30 bis 95 Mol-% der Komponente (b) und 0 bis 65 Mol-% der Komponente (c) verwendet worden sind,

auf ein Substrat aufbringt und härtet.

2. Verfahren nach Anspruch 1, dadurch gekennzeichnet, daß zur Herstellung des Lacks, bezogen auf Gesamt-Molzahl der Ausgangskomponenten, 20 bis 40 Mol-% der Komponente (a), 40 bis 80 Mol-% der Komponente (b) und höchstens 40 Mol-% der Komponente (c) verwendet worden sind.

3. Verfahren nach Anspruch 1 oder 2, dadurch gekennzeichnet, daß die Weiterkondensation in Gegenwart eines sauren oder basischen Kondensationskatalysators durchgeführt worden ist.

4. Verfahren nach einem der Ansprüche 1 bis 3, dadurch gekennzeichnet, daß die zur Vorkondensation eingesetzte Wassermenge mittels feuchtigkeitshaltiger Adsorbentien, wasserhaltiger organischer Lösungsmittel oder Salzhydraten eingetragen worden ist.

5. Verfahren nach einem der Ansprüche 1 bis 4, dadurch gekennzeichnet, daß man die aufgetragene Lackschicht durch Wärmebehandlung bei einer Temperatur bis 150°C, vorzugsweise 60 bis 130°C, härtet.

6. Verfahren nach einem der Ansprüche 1 bis 5, dadurch gekennzeichnet, daß man dem Lack übliche Lackadditive, wie organische Verdünnungsmittel, Verlaufmittel, Färbemittel, UV-Stabilisatoren, Füllstoffe, Viskositätsregler oder Oxidationsinhibitoren, einverleibt.

7. Mit einer kratzfesten Beschichtung versehene Substrate, erhältlich nach dem Verfahren eines der Ansprüche 1 bis 6.

8. Lack für kratzfeste Beschichtungen, dadurch gekennzeichnet, daß er erhalten worden ist durch hydrolytische Vorkondensation von

a) mindestens einer im Reaktionsmedium löslichen Zirkonverbindung der Formel I

$$ZrR_4 \quad (I)$$

in der R Halogen, Hydroxy, Alkoxy, Acyloxy oder einen Chelatliganden darstellt;

b) mindestens einem organofunktionellen Silan der Formel II

$$R'_m (R'' Y)_n SiX_{(4-m-n)} \quad (II)$$

in der R' Alkyl oder Alkenyl bedeutet, R'' Alkylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe $—NR'''_2$ (R''' = Wasserstoff und/oder Alkyl) bedeutet, Y Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, m und n den Wert 0, 1, 2 oder 3 haben, wobei m + n den Wert 1, 2 oder 3 hat; und gegebenenfalls

c) mindestens einem im Reaktionsmedium löslichen, schwerflüchtigen Oxid eines Elementes der Hauptgruppen Ia bis Va oder der Nebengruppe IVb oder Vb des Periodensystems, mit Ausnahme von Zirkon, oder mindestens einer im Reaktionsmedium löslichen, unter den Reaktionsbedingungen ein schwerflüchtiges Oxid bildenden Verbindung eines dieser Elemente;

mit einer geringeren Wassermenge als der zur vollständigen Hydrolyse der hydrolysierbaren Gruppen stöchiometrisch erforderlichen Menge, gegebenenfalls in Gegenwart eines Kondensationskatalysators, wobei, bezogen auf die Gesamt-Molzahl der Ausgangskomponenten, 5 bis 70 Mol-% der Komponente (a), 30 bis 95 Mol-% der Komponente (b) und 0 bis 65 Mol-% der Komponente (c) verwendet worden sind.

9. Lack nach Anspruch 8, dadurch gekennzeichnet, daß er durch Zugabe mindestens der Wassermenge, die zur Hydrolyse der verbliebenen hydrolysierbaren Gruppen erforderlich ist, sowie gegebenenfalls eines Kondensationskatalysators weiterkondensiert worden ist.

10. Lack nach Anspruch 8 oder 9, dadurch gekennzeichnet, daß übliche Lackadditive, wie organische Verdünnungsmittel, Verlaufmittel, Färbemittel, UV-Stabilisatoren, Füllstoffe, Viskositätsregler oder Oxidationsinhibitoren, enthält.

**Revendications**

1. Procédé de fabrication de revêtements résistant à la rayure, caractérisé en ce qu'on applique sur un support et durcit une laque obtenue par précondensation hydrolytique de:

a) au moins une combinaison de zirconium soluble dans le milieu réactionnel, selon la formule I

$$ZrR_4 \quad (I)$$

dans laquelle R représente un halogène, un hydroxy, un alcoxy, un acyloxy ou un ligand chélaté;

b) au moins un silane de fonction organique de la formule II

$$R'_m (R'' Y)_n SiX_{(4-m-n)} \quad (II)$$

dans laquelle R' répresente un alkyle ou un alcényle, R'' un alkylène ou un alcéynlène, ces restes pouvant être interrompus par des atomes d'oxygène ou de soufre ou des groupes —NH, X représente un hydrogène, un halogène, l'hydroxyle, un alcoxyle, un acyloxyle ou le groupe $—NR'''_2$ (R''' = hydrogène et/ou alkyle, Y est un halogène ou, le cas échéant, un groupe substitué amino, amide, aldéhyde; alkyl carbonyle, carboxy, mercapto, cyano, alcoxy, alcoxycarbonyle, acide sulfonique, acide phosphorique, acryloxyle, méthacryloxy, époxy ou vinyle, m et n ayant la valeur 0, 1, 2 ou 3 m + n la valeur 1, 2 ou 3; et, le cas échéant,

c) au moins un oxyde peu volatil, soluble dans le milieu réactionnel, d'un élément des groupes principaux Ia à Va ou des groupes secondaires IVb ou Vb de la classification périodique des éléments, à l'exception du zirconium ou d'au moins un composé de l'un de ces éléments, soluble dans le milieu réactionnel, formant un oxyde peu volatil dans les conditions de la réaction stoechiométrique avec une quantité d'eau inférieure à la quantité stoechiométrique nécessaire à l'hydrolyse complète des groupes hydrolysables, le cas échéant, en présence d'un catalyseur de condensation et ensuite poursuite de la condensation par addition d'au moins la quantité d'eau nécessaire à l'hydrolyse des groupes hydrolysables restants ainsi que, le cas échéant, en présence d'un catalyseur de condensation, 5 à 70% moles des composants (a), 30 à 95% moles de composants (b) et 0 à 65% moles des composants (c) ayant été utilisés, rapporté au nombre total de moles des composants de départ.

2. Procédé selon la revendication 1, caractérisé en ce que, 20 à 40% moles du composant (a), 40 à 80% moles du composant (b) et au plus 40% moles du composant (c) ont été utilisés pour la fabrication de la laque, rapporté au nombre total de moles des composants de départ.

3. Procédé selon la revendication 1 ou 2, caractérisé en ce que la poursuite de la condensation a eu lieu

en présence d'un catalyseur de condensation acide ou basique.

4. Procédé selon l'une des revendications 1 à 3, caractérisé en ce que la quantité d'eau utilisée pour la pré-condensation a été introduite par des adsorbants contenant de l'humidité, des solvants organiques contenant de l'eau ou des hydrates de sels.

5. Procédé selon l'une des revendications 1 à 4, caractérisé en ce que l'on durcit la couche de laque appliquée par traitement thermique à une température pouvant atteindre 150°C, de préférence de 60 à 130°C.

6. Procédé selon l'une des revendications 1 à 5, caractérisé en ce que l'on incorpore dans la laque ce que l'on incorpore dans la laque des additifs habituels, tels que des diluants organiques des produits nivelants, des colorants, des stabilisants envers l'UV, des charges, des régulateurs de viscosité ou des inhibiteurs d'oxydation.

7. Substrats munis d'un revêtement résistant à la rayure, pouvant être obtenu par le procédé selon l'une des revendications 1 à 6.

8. Laque pour des revêtements résistant à la rayure, caractérisée en ce qu'elle a été obtenue par une précondensation hydrolytique de:

a) au moins une combinaison de zirconium soluble dans l'agent de réaction selon la formule I

$$ZrR_4 \quad (I)$$

dans laquelle R rest un halogène, un hydroxy, un alcoxy, un acryloxyle, ou un ligand chélaté;

b) au moins un silane de fonction organique de la formule II

$$R'_m (R'' Y)_n SiX_{(4-m-n)} \quad (II)$$

dans laquelle R' est un alkyle ou un alcényle, R'' un alkylène ou un alcénylène, ces restes pouvant être interrompus par des atomes d'oxygène ou de soufre ou des groupes —NH, X est l'hydrogène, un halogène, un hydroxy, de l'alcoxyle, de l'acyloxyle ou le groupe —$NR'''_2$ (R''' = hydrogène et/ou alkyle, Y est de l'halogène ou, le cas échéant, un groupe substitué amino, amide, aldéhyde; alkylcarbonyle, carboxy, mercapto, cyano, alcoxy, alcoxycarbonyle, acide sulfonique, acide phosphorique, acryloxy, méthacryloxy, époxy ou vinyle, m et n ayant la valeur 0, 1, 2 ou 3, m + n la valeur 1, 2 ou 3; et, le cas échéant,

c) au moins un oxyde peu volatil, soluble dans le milieu réactionnel, d'un élément des groupes principaux Ia à Va ou des groupe secondaire IVb ou Vb de la classification périodique des éléments, à l'exception du zirconium, ou au moins d'un composé de l'un de ces éléments, soluble dans le milieu réactionnel formant un oxyde peu volatil dans les conditions de la réaction, avec une quantité d'eau inférieure à la quantité stoechiométrique nécessaire pour l'hydrolyse complète des groupes hydrolysables, le cas échéant, en présence d'un catalyseur de condensation, 5 à 70% moles des composants (a), 30 à 95% moles des composants (b) et 0 à 65% moles des composants (c) ayant été utilisés, rapporté au nombre total de moles.

9. Laque selon la revendication 8, caractérisé en ce que sa condensation a été poursuivie par addition d'au moins de la quantité d'eau nécessaire à l'hydrolyse des groupes hydrolysables restants ainsi que, le cas échéant, en présence d'un catalyseur de condensation.

10. Laque selon la revendication 8 ou 9, caractérisé en ce qu'elle renferme des additifs habituels de laque tels que des diluants organiques, des produits nivelants, des colorants, des stabilisants envers l'UV, des charges, des régulateurs de viscosité ou des inhibiteurs d'oxydation.

**Claims**

1. A process for the production of scratch-resistant coatings, characterized in that a lacquer which has been obtained by hydrolytic precondensation of

a) at least one zirconium compound which is soluble in the reaction medium and has the general formula I

$$ZrR_4 \quad (I)$$

wherein R represents halogen, hydroxy, alkoxy, acyloxy or a chelate ligand;

b) at least one organofunctional silane of the general formula II

$$R'_m (R'' Y)_n SiX_{(4-m-n)} \quad (II)$$

wherein R' denotes alkyl or alkenyl, R'' represents alkylene or alkenylene, said radicals possibly being interrupted by oxygen or sulfur atoms or —NH— groups; X represents halogen, hydroxy, alkoxy, acyloxy or the group —$NR'''_2$ (R''' = hydrogen and/or alkyl); Y represents halogen or an optionally substituted amino, amide, aldehyde, alkylcarbonyl, carboxy, mercapto, cyano, alkoxy, alkoxycarbonyl, sulfonic acid, phosphoric acid, acryloxy, methacryloxy, epoxy or vinyl group; m and n have the value 0, 1, 2 or 3, with m + n having the value 1, 2 or 3;

and, if appropriate,

c) at least one low-volatility oxide, soluble in the reaction medium, of an element of main groups Ia to Va or sub-groups IVb or Vb of the Periodic System with the exception of zirconium, or at least one compound of one of these elements, soluble in the reaction medium, forming a low volatility-oxide under the reaction conditions;
with an amount of water smaller than the one stoichiometrically required for the complete hydrolysis of the hydrolyzable groups, if appropriate, in the presence of a condensation catalyst, and subsequent further condensation by addition of at least that amount of water required for the hydrolysis of the remaining hydrolyzable groups, and, if appropriate, of a condensation catalyst, using 5 to 70 mole % of component (a), 30 to 95 mole % of component (b), and 0 to 65 mole % of component (c), based on the total number of moles of the starting components, is applied to a substrate and hardened.

2. A process according to claim 1, characterized in that 20 to 40 mole % of component (a), 40 to 80 mole % of component (b) and not more than 40 mole % of component (c), based on the total number of moles of the starting components, have been used to produce the lacquer.

3. A process according to claim 1 or 2, characterized in that the further condensation has been carried out in the presence of an acidic or basic condensation catalyst.

4. A process according to any one of claims 1 to 3, characterized in that the amount of water used for precondensation has been introduced by means of moisture-containing adsorbents, water-containing organic solvents or hydrated salts.

5. A process according to any one of claims 1 to 4, characterized in that the lacquer layer applied is hardened by heat treatment at a temperature of up to 150°C, preferably 60 to 130°C.

6. A process according to any one of claims 1 to 5, characterized in that customary lacquer additives, such as organic diluents, levelling agents, coloring agents, UV stabilizers, fillers, viscosity regulators or oxidation inhibitors, are incorporated into the lacquer.

7. Substrates provided with a scratch-resistant coating obtainable according to the process of any one of claims 1 to 6.

8. A lacquer for scratch-resistant coatings, characterized in that it has been obtained by hydrolytic precondensation of

a) at least one zirconium compound which is soluble in the reaction medium and has the general formula I

$$ZrR_4 \qquad (I)$$

wherein R represents halogen, hydroxy, alkoxy, acyloxy or a chelate ligand;

b) at least one organofunctional silane of the general formula II

$$R'_m (R'' Y)_n SiX_{(4-m-n)} \qquad (II)$$

wherein R' denotes alkyl or alkenyl, R'' represents alkylene or alkenylene, said radicals possibly being interrupted by oxygen or sulfur atoms or —NH— groups; X represents halogen, hydroxy, alkoxy, acyloxy or the group $—NR'''_2$ (R''' = hydrogen and/or alkyl); Y represents halogen or an optionally substituted amino, amide, aldehyde, alkylcarbonyl, carboxy, mercapto, cyano, alkoxy, alkoxycarbonyl, sulfonic acid, phosphoric acid, acryloxy, methacryloxy, epoxy or vinyl group; m and n have the value 0, 1, 2 or 3, with m + n having the value 1, 2 or 3;
and, if appropriate,

c) at least one low-volatility oxide, soluble in the reaction medium, of an element of main groups Ia to Va or sub-groups IVb or Vb of the Periodic System with the exception of zirconium, or at least one compound of one of these elements, soluble in the reaction medium, forming a low volatility-oxide under the reaction conditions;
with an amount of water smaller than the one stoichiometrically required for the complete hydrolysis of the hydrolyzable groups, if appropriate, in the presence of a condensation catalyst, using 5 to 70 mole % of component (a), 30 to 95 mole % of component (b), and 0 to 65 mole % of component (c), based on the total number of moles of the starting components.

9. A lacquer according to claim 8, characterized in that it has been further condensed by addition of at least that amount of water required for hydrolysis of the remaining hydrolyzable groups and, if appropriate, a condensation catalyst.

10. A lacquer according to claims 8 or 9, characterized in that it contains customary lacquer additives, such as organic diluents, levelling agents, coloring agents, UV stabilizers, fillers, viscosity regulators or oxidation inhibitors.